# EUROPEAN PATENT APPLICATION

(11) **EP 1 211 062 A1**
(43) Date of publication of application: **05.06.2002**
(21) Application number: 01127233.3
(22) Date of filing: 16.11.2001
(51) Int. Cl.: B32B 15/01, C23C 28/02

(54) **Multi-layered structure material and manufacturing methods of the same**

(30) Priority: 16.11.2000 JP 2000349710
(71) Applicant: ARACO KABUSHIKI KAISHA, Toyota-shi, Aichi-ken 473-8512 (JP)
(72) Inventor: Morita, Hiroyuki, Yoshiwara-cho, Toyota-shi, Aichi-ken (JP)
(74) Representative: Barske, Heiko, Dr. rer. nat.

(57) **Abstract**

A multi-layered structure material composed of a substrate of heat resistance material and a plurality of metal layers formed on at least one surface of the substrate through a pin-holeless intermediate metal layer of melting point lower than that of the metal layers. The multi-layered structure material can be made by heating the substrate with the metal layers to a temperature above the melting point of the intermediate metal layer or by heating the substrate with the metal layers to a temperature at which an eutectic intermediate metal layer is formed.

## Description

The present invention relates to a multi-layered structure material formed with a metal layer on the surface of a substrate, for example, suitable for a hydrogen separation material in a fuel gas production system.

As a multi-layered structure material of this kind, there have been proposed a function structure material formed with a metal layer in the form of a primary function membrane formed on a substrate, a function structure material composed of a substrate in the form of a primary function layer and a metal layer in the form of an auxiliary function membrane supported on the substrate, a structure material formed with a metal layer in the form of a protective membrane supported on a substrate, and the like. In Japanese Patent Laid-open Publication 62-202064, there have been also proposed a multi-layered structure material of the kind used as component parts of an automotive vehicle, a precision instrument, an aerospace instrument, etc. and a manufacturing method of the same.

In the structure material, a metal material containing magnesium or magnesium alloy substituted for a conventional metal material containing aluminum or aluminum alloy is used to lighten the structure material without causing deterioration of its function. As the metal material containing magnesium or magnesium alloy is superior in activity, a metal layer in the form of an anticorrosive membrane is formed on the surface of a substrate made of the metal material containing magnesium or magnesium alloy. Although the metal layer in the form of the anticorrosive membrane is formed on the substrate by wet-plating or dry-plating, the metal layer is inevitably formed with undesired pin-holes. This causes corrosion or rust of the substrate. For this reason, the structure material described above is produced in the form of a multi-layered structure material composed of a surface layer and a pin-holeless layer formed in sequence on the surface of a substrate made of magnesium or magnesium alloy. The pin-holeless metal layer is formed by adhering a metal layer of different kinds of metal material to the surface of the substrate of magnesium or magnesium alloy, forming an eutectic layer of lower melting point on interfacial surfaces between the metal layer and the substrate by heating and subjecting the eutectic layer to melting treatment.

In a manufacturing method of the multi-layered structure material proposed in the Japanese Publication, it is indispensable to form the eutectic layer on the interfacial surfaces between the metal layer and the substrate of magnesium or magnesium alloy. However, in the case that the material of the substrate is selected from metal materials different from magnesium or magnesium alloy, the material of the metal layer is restricted to the selected metal material for the substrate.

It is, therefore, a primary object of the present invention to provide a multi-layered structure material and a manufacturing method of the same capable of selecting the material of the metal layer without any restriction relative to the material of the substrate.

According to the present invention, the object is accomplished by providing a multi-layered structure material composed of a substrate of heat resistant material and a plurality of metal layers formed on at least one surface of the substrate through a pin-holeless intermediate metal layer of melting point lower than that of the metal layers.

In the multi-layered structure material according to the present invention, the intermediate metal layers are made of a metal material of melting point lower than that of the metal layers and interposed among the metal layers before subjected to the melting treatment. Thus, the intermediate metal layer is formed as an eutectic layer by eutectic reaction during heating process of the metal layers.

In a first manufacturing method of the present invention, the multi-layered structure material is produced by forming a plurality of metal layers on at least one surface of a substrate of heat resistance material through an intermediate metal layer of melting point lower than that of the metal layers, heating the substrate formed thereon with the metal layers at a temperature higher than the melting point of the intermediate metal layer and lower than the melting point of the other metal layers in a non-oxidation atmosphere, and subjecting the intermediate metal layer to melting treatment. With such a manufacturing method, the intermediate metal layer of the structure material is formed without undesired pin-holes.

In a second manufacturing method of the present invention, the multi-layered structure material is produced by forming a plurality of metal layers on at least one surface of a substrate of heat resistance material, and heating the substrate formed thereon with the metal layers in a non-oxidation atmosphere so that an eutectic layer is formed on interfacial surfaces of the uppermost metal layer and the lowermost metal layer by eutectic reaction of the metal layers.

A multi-layered structure material according to the present invention is composed of a substrate of heat resistance material, a plurality of metal layers formed on at least one surface of the substrate through a pin-holeless intermediate metal layer of melting point lower than that of the metal layers and subjected to melting treatment. The material of the substrate may be selected from various kinds of metal materials, which material may be selected from inorganic material such as ceramic materials. For example, the material of the substrate may be selected from a group consisting of aluminum, aluminum alloy, magnesium, magnesium alloy, etc. or a group consisting of alumina, silica, titania, zirconia, magnesia, etc.

The metal layers adhered to the surface of the substrate is in the form of a layer of aluminum or aluminum alloy, a layer of magnesium or magnesium alloy, a layer of palladium or palladium alloy or a layer of silicon. These metal layers are appropriately combined in accordance with use of the multi-layered structure material. The metal layers are adhered to the surface of the substrate by coating the metal materials on the surface of the substrate, plating the metal materials to the surface of the substrate, deposition of the metal materials to the surface of the substrate or sputtering the metal materials to the surface of the substrate.

In the multi-layered structure material according to the present invention, at least one of the metal layers in a multi-layered condition is selected from metal layers made of metal material the melting point of which is lower than other metal layers or selected from metal layers forming an eutectic layer on interfacial surfaces of them.

In the case that at least one of the metal layers in a multi-layered condition is selected from metal layers made of metal material of the lower melting point, the lowermost metal layer is made of vanadium, an intermediate metal layer is made of magnesium, and the uppermost metal layer is made of palladium. In this case, the intermediate metal layer made of magnesium is used as the metal layer of the lower melting point. In the manufacturing process of the multi-layered structure material in such a manner as described above, the metal layers adhered to the substrate in a multi-layered condition are heated in a non-oxidation atmosphere by vacuum heating, heating in an atmosphere under constant pressure or the like. The heating temperature is controlled to melt only the intermediate metal layer without melting the other metal layers. In such a manner, the intermediate metal layer is subjected to melting treatment and is formed without undesired pin-holes.

In the case that at least one of the metal layers in a multi-layered condition is selected from metal layers forming an eutectic layer on interfacial surfaces of them, the lower metal layer is made of silicon, and the upper metal layer is made of palladium. In this case, an eutectic layer is formed as an intermediate metal layer on interfacial surfaces of both the metal layers by eutectic reaction caused by heating. In the manufacturing process of the multi-layered structure material, the melting point of the intermediate metal layer in the form f the eutectic layer is lower than that of the upper and lower metal layers. Thus, the metal layers in a condition adhered to the substrate are heated in a non-oxidation atmosphere in the same manner as described above. In such a manner, the intermediate metal layer is subjected to melting treatment and is formed without undesired pin-holes.

As is understood from the above description, the intermediate metal layer is formed without pin-holes, irrespectively of the material of the substrate, Accordingly, various kinds of heat resistance materials can be used as the material of the substrate. For example, the substrate may be made of various kinds of ceramic materials. In addition, the material of the metal layers can be selected from metal materials superior in function without any restriction relative to the material of the substrate.

### Example 1:

A multi-layered structure material formed with three metal layers on the surface of a substrate plate was manufactured in such a manner as described below. The substrate plate was prepared in the form of a base plate of porous alumina. The three metal layers were prepared respectively in the form of a layer of palladium formed in thickness of 3 µm on the substrate plate by plating, a layer of magnesium formed in thickness of 0.5 µm on the layer of palladium by sputtering, and a layer of palladium formed in thickness of 1.5 µm on the layer of magnesium by sputtering. Thus, the layer of magnesium was formed as an intermediate metal layer of lower melting point in the multi-layered structure material. The multi-layered structure material was subjected to heating treatment to melt the intermediate metal layer of magnesium. The heating treatment was carried out at 700 °C under constant pressure in an atmosphere of argon for four hours. During the heating treatment, only the intermediate metal layer of magnesium was melted.

In a permeation test of helium gas applied to the multi-layered structure material, a permeation temperature of helium gas was maintained at 25 °C, a difference in pressure between the front and back surfaces of the structure material was controlled in a value of 0.1 Mpa, and the permeation area of helium gas in the structure material was defined in the form of a circular surface of 20 mm in diameter. For comparison with the helium gas permeability of the multi-layered structure material, helium gas permeability of a conventional structure material was tested in the same manner as described above. As a result, the helium gas permeability of the multi-layered structure material according to the present invention was 7.3 (sccm) in permeation flow amount, whereas the helium gas permeability of the conventional structure material was 17.4 (sccm) in permeation flow amount. From this fact, it has been confirmed that pin-holes in the multi-layered structure material are noticeably reduced.

### Example 2

A multi-layered structure material formed with two metal layers on the surface of a substrate plate and an eutectic layer on interfacial surfaces of the metal layers was manufactured as described below. The substrate plate was prepared in the form of a base plate of porous alumina. The two metal layers were prepared respectively in the form of a layer of silicon formed in thickness of 2 µm on the substrate plate by plating and a layer of palladium formed in thickness of 3 µm on the layer of palladium by sputtering.

The multi-layered structure material was treated by heating to form an eutectic layer on interfacial surfaces of the silicon layer and palladium layer by eutectic reaction thereof, and an intermediate metal layer in the form of the eutectic layer was treated by melting process. The heating treatment was carried out at 800 °C under constant pressure of 1000 kg/cm² for two hours so that only the eutectic layer is melted. As a result of a helium gas permeation test of the multi-layered structure material conducted in the same manner as in Example 1, it has been confirmed that pin-holes in the multi-layered structure material are noticeably reduced as in Example 1..

## Claims

1. A multi-layered structure material composed of a substrate of heat resistance material and a plurality of metal layers formed on at least one surface of the substrate through a pin-holeless intermediate metal layer of melting point lower than that of the metal layers.

2. A multi-layered structure material as claimed in claim 1, wherein the intermediate metal layer is interposed among the metal layers before subjected to melting treatment.

3. A multi-layered structure material as claimed in claim 1, wherein the intermediate metal layer is in the form of an eutectic layer formed by eutectic reaction of the metal layers during heating process thereof.

4. A manufacturing method of a multi-layered structure material claimed in claim 2, comprising the steps of:
forming a plurality of metal layers on at least one surface of a substrate made of heat resistance material through an intermediate metal layer of melting point lower than that of the metal layers;
heating the substrate formed thereon with the metal layers at a temperature higher than the melting point of the intermediate metal layer and lower than the melting point of the other metal layers in a non-oxidation atmosphere, and
subjecting the intermediate metal layer to melting treatment so that the intermediate metal layer is formed without pin-holes.

5. A manufacturing method of a multi-layered structure material claimed in claim 3, comprising the steps of:
forming a plurality of metal layers on at least one surface of a substrate made of heat resistance material; and
heating the substrate formed thereon with the metal layers in a non-oxidation atmosphere so that an eutectic layer is formed on interfacial surfaces of the uppermost metal layer and the lowermost metal layer by eutectic reaction of the metal layers.
